# EUROPÄISCHE PATENTSCHRIFT

(11) **EP 1 793 953 B1**
(45) Veröffentlichungstag und Bekanntmachung des Hinweises auf die Patenterteilung: **25.06.2008**
(21) Anmeldenummer: 04764675.7
(22) Anmeldetag: 01.09.2004
(51) Int. Cl.: B23B 31/28

(54) **MAGNETISCHE WERKZEUGFIXIERUNG**
MAGNETIC TOOL FIXTURE
SYSTEME MAGNETIQUE DE FIXATION D'OUTIL

(43) Veröffentlichungstag der Anmeldung: 13.06.2007
(73) Patentinhaber: Ott-Jakob Spanntechnik GmbH, 87663 Lengenwang (DE)
(72) Erfinder: SAUER, Hermann, 55758 Stipshausen (DE)
(74) Vertreter: Schwarz, Thomas
(86) Internationale Anmeldenummer: PCT/EP2004/009710
(87) Internationale Veröffentlichungsnummer: WO 2006/024313

(56) Entgegenhaltungen:
- EP-A- 0 775 546
- DE-A1- 19 529 414

## Beschreibung

Die Erfindung betrifft eine Werkzeugfixierung für Werkzeugmaschinen umfassend ein Spindelgehäuse mit einer darin drehbaren Spindel-Hauptwelle, an dessen Ende eine Werkzeugaufnahme ausgebildet ist, und ein in der Werkzeugaufnahme fixierbares Werkzeug mit einem Werkzeughalter und einem daran angeordneten Werkzeugkopf. Darüber hinaus wird ein Verfahren zum Wechseln eines Werkzeugs vorgeschlagen (siehe, z.B EP- 0775 546- A).

In den bekannten Werkzeugmaschinen wird in Abhängigkeit des zu bearbeitenden Werkstücks bzw, der in diese einzuarbeitende Formgebung ein entsprechendes Werkzeug eingesetzt. Die für den jeweiligen Arbeitsgang nicht benötigten Werkzeuge werden in einem Werkzeugmagazin bereitgehalten. Für den Wechselvorgang wird die Spindel-Hauptwelle der Werkzeugmaschine angehalten und das Werkzeug aus der Werkzeugaufnahme herausgeschraubt und durch ein anderes Werkzeug aus dem Werkzeugmagazin ersetzt.

Eine derartige Vorgehensweise erfordert auch bei weitgehend automatisierten Wechselvorrichtungen einen vergleichsweise hohen zeitlichen Aufwand, der zu Stillstandszeiten der Werkzeugmaschine führt.

Aus diesem Grund lag der Erfindung die Aufgabe zugrunde, eine Werkzeugfixierung für Werkzeugmaschinen bereitzustellen, die einen vollständig automatisierbaren und schnellen Werkzeugwechsel ermöglicht.

Eine weitere Teilaufgabe bestand darin, ein Verfahren zum schnellen Wechseln eines Werkzeugs zu entwickeln.

Die Aufgabe wird erfindungsgemäß mit einer Werkzeugfixierung gelöst, bei der das Spindelgehäuse einen Permanentmagneten und einen Elektromagneten umfasst, mit welchem ein Gegen-Magnetfeld zu dem Permanentmagneten erzeugbar ist, und bei dem das Werkzeug mindestens einen aus einem ferromagnetischen Material gefertigten Abschnitt aufweist.

Während des Betriebs der Werkzeugmaschine wird das Werkzeug über den hochenergiereichen Permanentmagneten in der Werkzeugaufnahme verdrehsicher gehalten. Zum Lösen des Werkzeuges aus der Werkzeugaufnahme wird dann kurzfristig ein Strom auf dem Elektromagneten aufgegeben und dadurch ein magnetisches Feld erzeugt. Dieses magnetische Feld des Elektromagneten wirkt entgegen der Richtung des von dem Permanentmagneten erzeugten Magnetfeldes und hebt dieses für die Zeit des Werkzeugwechsels auf, so dass das Werkzeug freigegeben wird und gewechselt werden kann.

In einer vorteilhaften Ausführungsform umfasst der mindestens eine ferromagnetische Abschnitt einen ringförmig um den Werkzeughalter ausgebildeten Spannflansch. Dieser Spannflansch kann besonders günstig mit einem auf der Unterseite des Permanentmagneten ausgebildeten Lagerflansch zusammenwirken und sorgt für eine exakte Ausrichtung des Werkzeugs.

Vorzugsweise weist der Spannflansch eine Lagerstelle zur Lagerung des Werkzeughalters auf. Mit Hilfe der zusätzlichen Lagerstelle können Querkräfte aufgenommen werden, wodurch die Präzision bei der Bearbeitung erhöht und die Lebenszeit des Werkzeugs gegenüber den bekannten Werkzeugen verlängert wird.

Es hat sich als günstig erwiesen, den Permanentmagneten ringförmig um die Spindel-Hauptwelle anzuordnen. Aufgrund der ringförmigen Anordnung wird rings um das Werkzeug eine gleichmäßige magnetische Feldstärke erzeugt und während des Betriebes eine sichere Fixierung in radialer Richtung realisiert.

Vorzugsweise ist in dem Spannflansch und/oder dem Lagerflansch eine ringförmige, den Werkzeughalter und/oder die Spindel-Hauptwelle umgebende Dichtung angeordnet. Bei der Dichtung kann es sich beispielsweise um einen O-Ring handeln. Durch die Dichtung wird eine Verunreinigung des Spannbereichs zwischen dem Spannflansch und dem Lagerflansch vermieden und dadurch eine hohe betriebliche Verfügbarkeit gewährleistet.

Günstigerweise ist die Werkzeugaufnahme zylindrisch oder kegelförmig und der Werkzeughalter mit einer komplementär zu der Werkzeugaufnahme ausgebildeten Gegen-Aufnahme ausgebildet.

Für eine Übertragung hoher Drehmomente können die Werkzeugaufnahme und die Gegen-Aufnahme mit Formschlusselementen ausgebildet sein. Unter Formschlusselementen werden Zahn- oder Keilwellenverbindungen verstanden, die beispielsweise mit einem Polygonprofil versehen sind.

In einer weiteren vorteilhaften Ausgestaltung ist der Elektromagnet in den Permanentmagneten integriert.

Vorzugsweise ist in dem Spindelgehäuse ein Sensor zum Sensieren des Spannzustandes der Werkzeugfixierung angeordnet. Mit Hilfe eines Signals des Sensors kann dann der Spannzustand auch außerhalb von gekapselten Werkzeugmaschinen dem Bediener angezeigt werden.

Für eine effektive Kühlung kann in der Spindel-Hauptwelle und in dem Werkzeughalter ein Kühlmittelkanal ausgebildet sein.

Die Teilaufgabe wird mit einem Verfahren gelöst, bei dem das Werkzeug während des Betriebes von einem Permanentmagneten gehalten und für den Zeitraum des Werkzeugwechsels von einem Elektromagneten ein dem Permanentmagneten entgegenwirkendes Magnetfeld temporär erzeugt wird.

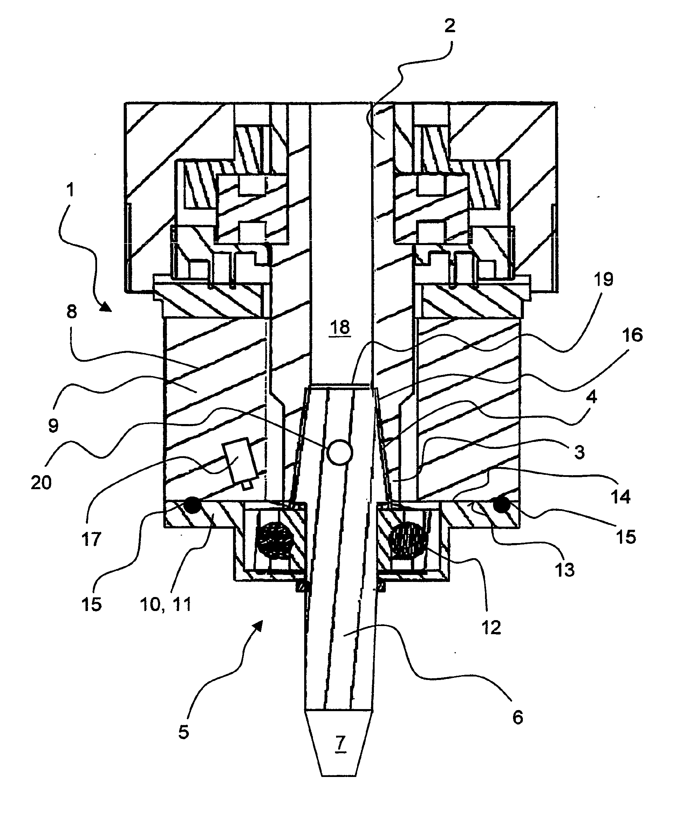

Die Erfindung wird nachfolgend anhand der einzigen Zeichnungsfigur näher erläutert.

Die Fig. zeigt in einem Querschnitt ein Spindelgehäuse 1 mit einer darin drehbar gelagerten Spindel-Hauptwelle 2 und ein an die Spindel-Hauptwelle 2 adaptiertes Werkzeug 5. Das Werkzeug 5 befindet sich in der gezeigten Darstellung in einer betriebsbereiten Position.

In dem unteren Bereich des Spindel-Gehäuses 1 ist die Spindel-Hauptwelle 2 in ihrer Umfangsrichtung vollständig von einem Permanentmagneten 8 umgeben, welcher integraler Bestandteil des Spindel-gehäuses 1 ist. Der Permanentmagnet 8 schließt auf seiner Unterseite 13 bündig mit dem unteren Ende 3 der Spindel-Hauptwelle 2 ab. Die Unterseite 13 des Permanentmagneten 8 ist als Lagerflansch 14 mit einer ebenen Fläche rechtwinklig zu der axialen Erstreckung der Spindel-Hauptwelle 2 ausgebildet.

Das untere Ende 3 der Spindel-Hauptwelle 2 weist eine kegelförmige Werkzeugaufnahme 4 auf. In diese Werkzeugaufnahme 4 ist das Werkzeug 5 drehfest eingesteckt. Die drehfeste Verbindung wird auch durch ein an der Werkzeugaufnahme 4 und der Gegen-Aufnahme 16 angeordnetes Formschlusselement 20 gewährleistet. Bei dem Formschlusselement 20 handelt es sich um einen an der Gegen-Aufnahme 16 ausgeformten Nocken, der in eine auf Seiten der Werkzeugaufnahme 4 ausgebildete, nicht näher gezeigte Nut eingreift.

Das Werkzeug 5 umfasst einen rohrförmigen Werkzeughalter 6 und einen Werkzeugkopf 7, mit welchem die Oberfläche eines nicht gezeigten Werkstückes bearbeitet werden kann. Das dem Werkzeugkopf 7 gegenüberliegende Ende des Werkzeughalters 6 ist als Gegen-Aufnahme 16 komplementär zu der Werkzeugaufnahme 4 ausgebildet. Die vorstehend beschriebenen Bauteile werden über die Spindel-Hauptwelle 2 in Drehung versetzt.

Um Eigenschwingungen des Werkzeugs zu vermeiden, umfasst das Werkzeug 5 eine Lagerstelle 12 und einen ortsfest zu dem Spindelgehäuse 1 stehenden Spannflansch 11. Dieser Spannflansch 11 liegt vollflächig auf dem Lagerflansch 14 des Permanentmagneten 8 auf. Der Spannflansch 11 ist als ferromagnetischer Abschnitt 10 aus einem ferromagnetischen Material gefertigt und wird aufgrund des von dem Permanentmagneten 8 ausgehenden Magnetfeldes kraftschlüssig an den Lagerflansch 14 des Permanentmagneten 8 angezogen.

Zwischen dem Lagerflansch 14 und dem Spannflansch 11 ist eine als O-Ring ausgeformte Dichtung 15 zu erkennen, die verhindert, dass es zwischen den Flanschen 11, 14 zu einem Feststoffeintrag in das Kühlmittel kommt. Das Kühlmittel wird über einen Kühlmittelkanal 18 der Spindel-Hauptwelle 2 herangeführt und tritt über einen Kühlmittelanschluss 19 in den Werkzeughalter 6 ein. In dem Werkzeughalter 6 setzt sich in axialer Richtung der Kühlmittelkanal 18 der Spindel-Hauptwelle 2 bis zu dem Werkzeugkopf 7 fort (nicht eingezeichnet).

In den Permanentmagneten 8 ist ein Elektromagnet 9 integriert, der während eines kurzen Zeitraumes mit Strom beaufschlagt werden kann und dadurch ein elektrisches Feld aufbaut. Dieses elektrische Feld wirkt entgegen der Richtung des magnetischen Feldes des Permanentmagneten 8 und hebt dieses temporär auf. In diesem Zeitraum fällt das Werkzeug 5 aus der Werkzeugaufnahme aufgrund seiner Schwerkraft heraus.

Die gezeigte gespannte Stellung des Werkzeugs 5 zu dem Spindelgehäuse 1 kann über einen Sensor 17 festgestellt und eine damit verbundene nicht weiter gezeigte Elektronik visualisiert werden.

### Bezugszeichenliste

- 1: Spindelgehäuse
- 2: Spindel-Hauptwelle
- 3: Ende Spindel-Hauptwelle
- 4: Werkzeugaufnahme
- 5: Werkzeug
- 6: Werkzeughalter
- 7: Werkzeugkopf
- 8: Permanentmagnet
- 9: Elektromagnet
- 10: Abschnitt aus ferromagnetischem Material
- 11: Spannflansch
- 12: Lagerstelle
- 13: Unterseite Permanentmagnet
- 14: Lagerflansch
- 15: Dichtung
- 16: Gegen-Aufnahme Werkzeughalter
- 17: Sensor
- 18: Kühlmittelkanal
- 19: Kühlmittelanschluss
- 20: Formschlusselement

## Patentansprüche

1. Werkzeugfixierung für Werkzeugmaschinen umfassend
- ein Spindelgehäuse (1) mit einer darin drehbaren Spindel-Hauptwelle (2), an dessen Ende (3) eine Werkzeugaufnahme (4) ausgebildet ist, und
- ein in der Werkzeugaufnahme (4) fixierbares Werkzeug (5) mit einem Werkzeughalter (6) und einem daran angeordneten Werkzeugkopf (7),
**dadurch gekennzeichnet,**
- **dass** das Spindelgehäuse (1) einen Permanentmagneten (8) und einen Elektromagneten (9) umfasst, mit welchem ein Gegen-Magnetfeld zu dem Permanentmagneten (8) erzeugbar ist, und
- **dass** das Werkzeug (5) mindestens einen aus einem ferromagnetischen Material gefertigten Abschnitt (10) aufweist.

2. Werkzeugfixierung nach Anspruch 1, **dadurch gekennzeichnet, dass** der mindestens eine ferromagnetische Abschnitt (10) einen ringförmig um den Werkzeughalter (6) ausgebildeten Spannflansch (11) umfasst.

3. Werkzeugfixierung nach Anspruch 2, **dadurch gekennzeichnet, dass** der Spannflansch (11) eine Lagerstelle (12) zur Lagerung des Werkzeughalters (6) aufweist.

4. Werkzeugfixierung nach einem der Ansprüche 1 bis 3, **dadurch gekennzeichnet, dass** der Permanentmagnet (8) ringförmig um die Spindel-Hauptwelle (2) angeordnet ist.

5. Werkzeugfixierung nach einem der Ansprüche 1 bis 4, **dadurch gekennzeichnet, dass** der Permanentmagnet (8) auf seiner Unterseite (13) mit einem Lagerflansch (14) ausgebildet ist.

6. Werkzeugfixierung nach einem der Ansprüche 2 bis 5, **dadurch gekennzeichnet, dass** in dem Spannflansch (11) und/oder dem Lagerflansch (14) eine ringförmige, den Werkzeughalter (6) und/oder die Spindel-Hauptwelle (2) umgebende Dichtung (15) angeordnet ist.

7. Werkzeugfixierung nach einem der Ansprüche 1 bis 6, **dadurch gekennzeichnet, dass** die Werkzeugaufnahme (4) zylindrisch oder kegelförmig ausgebildet ist.

8. Werkzeugfixierung nach einem der Ansprüche 1 bis 7, **dadurch gekennzeichnet, dass** der Werkzeughalter (6) mit einer komplementär zu der Werkzeugaufnahme (4) ausgebildeten Gegen-Aufnahme (16) ausgebildet ist.

9. Werkzeugfixierung nach Anspruch 8, **dadurch gekennzeichnet, dass** die Werkzeugaufnahme (4) und die Gegen-Aufnahme (16) mit Formschlusselementen (20) ausgebildet sind.

10. Werkzeugfixierung nach einem der Ansprüche 1 bis 9, **dadurch gekennzeichnet, dass** der Elektromagnet (9) in den Permanentmagneten (8) integriert ist.

11. Werkzeugfixierung nach einem der Ansprüche 1 bis 10, **dadurch gekennzeichnet, dass** in dem Spindel gehäuse (1) ein Sensor (17) zum Sensieren des Spannzustandes der Werkzeugfixierung angeordnet ist.

12. Werkzeugfixierung nach einem der Ansprüche 1 bis 11, **dadurch gekennzeichnet, dass** in der Spindel-Hauptwelle (2) und in dem Werkzeughalter (6) ein Kühlmittelkanal (18) ausgebildet ist.

13. Verfahren zum Wechseln eines Werkzeugs (5) einer Werkzeugmaschine, bei dem das Werkzeug (5) während des Betriebes von einem Permanentmagneten (8) gehalten und für den Zeitraum des Werkzeugwechsels von einem Elektromagneten (9) ein dem Permanentmagneten (8) entgegenwirkendes Magnetfeld temporär erzeugt wird.

## Claims

1. Tool fixture for machine tools comprising
- a spindle housing (1) with a spindle main shaft (2) which is rotatable therein and at the end (3) of which is formed a tool receiving mounting (4), and
- a tool (5) which can be fixed in the tool receiving mounting (4) and comprises a tool holder (6) and a tool head (7) arranged thereon,
**characterised in that**
- the spindle housing (1) comprises a permanent magnet (8) and an electromagnet (9) with which a magnetic field counteracting the permanent magnet (8) can be generated, and
- **in that** the tool (5) exhibits at least one portion (10) made of a ferromagnetic material.

2. Tool fixture according to claim 1, **characterised in that** the at least one ferromagnetic portion (10) comprises a clamping flange (11) which is formed in a ring around the tool holder (6).

3. Tool fixture according to claim 2, **characterised in that** the mounting flange (11) comprises a bearing (12) for supporting the tool holder (6).

4. Tool fixture according to one of claims 1 to 3, **characterised in that** the permanent magnet (8) is arranged in a ring around the spindle main shaft (2).

5. Tool fixture according to one of claims 1 to 4, **characterised in that** on its underside (13) the permanent magnet (8) is formed with a bearing flange (14).

6. Tool fixture according to one of claims 2 to 5, **characterised in that** a ring-shaped seal (15) surrounding the tool holder (6) and/or the spindle main shaft (2) is arranged in the mounting flange (11) and/or the bearing flange (14).

7. Tool fixture according to one of claims 1 to 6, **characterised in that** the tool receiving mounting (4) is cylindrical or conical.

8. Tool fixture according to one of claims 1 to 7, **characterised in that** the tool holder (6) is formed with a mating mounting (16) formed to complement the tool receiving mounting (4).

9. Tool fixture according to claim 8, **characterised in that** the tool receiving mounting (4) and the mating mounting (16) are formed with form-locking elements (20) .

10. Tool fixture according to one of claims 1 to 9, **characterised in that** the electromagnet (9) is integrated in the permanent magnet (8).

11. Tool fixture according to one of claims 1 to 10, **characterised in that** a sensor (17) is arranged in the spindle housing (1) to sense the mounting state of the tool fixture.

12. Tool fixture according to one of claims 1 to 11, **characterised in that** a coolant channel (18) is formed in the spindle main shaft (2) and in the tool holder (6).

13. Method for changing a tool (5) of a machine tool, in which the tool (5) is held by a permanent magnet (8) while in operation and a magnetic field counteracting the permanent magnet (8) is temporarily generated by an electromagnet (9) for the period of the tool change.

## Revendications

1. Système magnétique de fixation d'outil pour des machines outils comprenant :
- un boîtier de broche (1) avec un arbre principal de broche (2) pivotant à l'intérieur, à l'extrémité (3) duquel est configuré un logement pour outil (4), et
- un outil (5) pouvant être fixé dans le logement pour outil (4) avec un porte-outil (6) et une tête d'outil (7) disposée au niveau de ce dernier,
**caractérisé en ce,**
- **que** le boîtier de broche (1) comprend un aimant permanent (8) et un électroaimant (9), qui permet de produire un contrechamp magnétique à l'aimant permanent (8), et
- en ce que l'outil (5) présente au moins un segment (10) fabriqué en une matière ferromagnétique.

2. Système magnétique de fixation d'outil selon la revendication 1, **caractérisé en ce qu'**au moins un segment ferromagnétique (10) comprend une bride de tension (11) configurée de manière circulaire autour du porte-outil (6).

3. Système magnétique de fixation d'outil selon la revendication 2, **caractérisé en ce que** la bride de tension (11) présente un point d'appui (12) pour le logement du porte-outil (6).

4. Système magnétique de fixation d'outil selon l'une quelconque des revendications 1 à 3, **caractérisé en ce que** l'aimant permanent (8) est disposé de manière circulaire autour de l'arbre principal de la broche (2).

5. Système magnétique de fixation d'outil selon l'une quelconque des revendications 1 à 4, **caractérisé en ce que** l'aimant permanent (8) est configuré sur sa face inférieure (13) avec une bride de logement (14).

6. Système magnétique de fixation d'outil selon l'une quelconque des revendications 2 à 5, **caractérisé en ce qu'**une garniture étanche circulaire (15) entourant le porte-outil (6) et/ou l'arbre principal de la broche (2) est disposée dans la bride de tension (11) et/ou dans la bride de logement (14).

7. Système magnétique de fixation d'outil selon l'une quelconque des revendications 1 à 6, **caractérisé en ce que** le logement pour outil (4) a une forme cylindrique ou conique.

8. Système magnétique de fixation d'outil selon l'une quelconque des revendications 1 à 7, **caractérisé en ce que** le porte-outil (6) est configuré avec un contre-logement (16) servant de complément au logement d'outil (4).

9. Système magnétique de fixation d'outil selon la revendication 8, **caractérisé en ce que** le logement d'outil (4) et le contre-logement (16) sont configurés avec des éléments de fermeture géométrique (20).

10. Système magnétique de fixation d'outil selon l'une quelconque des revendications 1 à 9, **caractérisé en ce que** l'électro-aimant (9) est intégré dans l'aimant permanent (8).

11. Système magnétique de fixation d'outil selon l'une quelconque des revendications 1 à 10, **caractérisé en ce qu'**un capteur (17) est disposé dans le boîtier de la broche (1) pour détecter l'état de tension du système de fixation d'outil.

12. Système magnétique de fixation d'outil selon l'une quelconque des revendications 1 à 11, **caractérisé en ce qu'**un canal pour réfrigérant (18) est configuré dans l'arbre principal de la broche (2) et dans le porte-outil (6).

13. Procédé de changement d'un outil (5) d'une machine-outil, dans lequel l'outil (5) est tenu par un aimant permanent (8) pendant son fonctionnement et pendant la durée du changement d'outil un champ magnétique opposé à l'aimant permanent (8) est produit temporairement par un électroaimant (9).
